# EUROPÄISCHE PATENTSCHRIFT

(11) **EP 1 250 591 B1**
(45) Veröffentlichungstag und Bekanntmachung des Hinweises auf die Patenterteilung: **19.05.2010**
(21) Anmeldenummer: 00991104.1
(22) Anmeldetag: 20.12.2000
(51) Int. Cl.: G01N 27/407, G01N 27/419

(54) **VERFAHREN ZUM BETREIBEN EINES SENSORS ZUR BESTIMMUNG DER KONZENTRATION OXIDIERENDER GASE IN GASGEMISCHEN**
METHOD FOR OPERATING A SENSOR FOR DETERMINING THE CONCENTRATION OF OXIDIZING GASES IN GAS MIXTURES
PROCEDE D'EXPLOITATION D'UN DETECTEUR POUR DETERMINER LA CONCENTRATION EN GAZ OXYDANTS DE MELANGES GAZEUX

(30) Priorität: 23.12.1999 DE 19962912
(43) Veröffentlichungstag der Anmeldung: 23.10.2002
(73) Patentinhaber: ROBERT BOSCH GMBH, 70442 Stuttgart (DE)
(72) Erfinder: CRAMER, Berndt, 71229 Leonberg (DE); SCHUMANN, Bernd, 71277 Rutesheim (DE)
(74) Vertreter: Jakelski, Joachim
(86) Internationale Anmeldenummer: PCT/DE2000/004550
(87) Internationale Veröffentlichungsnummer: WO 2001/048467

(56) Entgegenhaltungen:
- EP-A- 0 791 826
- EP-A- 0 798 555
- EP-A- 0 859 232
- EP-A- 0 892 265
- EP-A- 0 937 980
- DE-A- 19 907 946
- FR-A- 2 794 863

## Beschreibung

Die Erfindung betrifft ein Verfahren zum Betreiben eines Sensors zur Bestimmung der Konzentration oxidierender Gase, insbesondere zur Bestimmung der Stickoxid-Konzentration in Abgasen von Verbrennungskraftmaschinen, nach dem Oberbegriff des Anspruchs 1.

### Stand der Technik

Ein solcher Sensor geht beispielsweise aus der EP 0 791 826 A1 hervor.

Aufgrund des Umstands, dass alle Elektroden eines solchen Sensors leitend mit dem Feststoffelektrolyten verbunden sind und die Isolationsschicht des Heizers einen endlichen Widerstand aufweist, dass folglich sämtliche Elektroden über elektrisch leitende Strukturen miteinander und hochohmig mit dem Heizer verbunden sind, entstehen elektrische Felder und elektrische Ströme zwischen den einzelnen Elektroden und zwischen den Elektroden und dem Heizer, welche das Messergebnis verfälschen.

### Vorteile der Erfindung

Das erfindungsgemäße Verfahren mit den in Anspruch 1 genannten Merkmalen bietet demgegenüber den Vorteil, dass die durch die gegenseitigen Kopplungen der Elektroden über elektrische Felder und Ströme im Feststoffelektrolyten sowie die durch die Spannungsabfälle an den Zuleitungswiderständen entstehenden Messfehler durch aktive Kompensierung beseitigt oder zumindest minimiert werden können. Durch Veränderung der an den Elektroden funktionsgemäß anliegenden Spannungen in Abhängigkeit von den in den Elektrodenzuleitungen und/oder zwischen den Elektroden fliessenden Strömen so, dass die an den Elektroden im Innern des Sensors anliegenden Spannungen den vorgegebenen Sollwerten entsprechen, ist es möglich, die Spannungen an den Elektroden präzise einzustellen, ohne dass Fehler durch Spannungsabfälle an den Elektrodenzuleitungen oder aufgrund einer gegenseitigen Kopplung der Elektroden verfälscht werden. Besonders vorteilhaft dabei ist, dass die Einstellung unabhängig von der Stromstärke ist, mit der die einzelnen Elektroden beaufschlagt werden.

Eine vorteilhafte Ausführungsform sieht dabei vor, dass man zu den an den Elektroden liegenden Spannungen Spannungen addiert, die einer mit Faktoren gewichteten Rückkopplung von Spannungsanteilen entsprechen, die den Strömen proportional sind. Darüber hinaus können die mittels an sich bekannter elektrischer Schaltungsglieder gebildeten gleitenden Mittelwerte der den Strömen proportionalen Spannungen und/oder deren Ableitung auch höheren Grades und/oder auch deren gleitende Mittelwerte oder Linearkombinationen daraus rückgekoppelt werden. Auf diese Weise ist es auch möglich, kapazitive Kopplungen zu eliminieren.

Die Einstellung der Spannung an den Elektroden geschieht in diesem Falle vorteilhaftweise durch Veränderung dieser Faktoren, wobei man diese Faktoren solange erhöht, bis aufgrund der Rückkopplung das System zu schwingen beginnt. Die Schwingung entsteht dann, wenn der Rückkoppelfaktor betragsmäßig ≥1 ist und gleichzeitig die Phase größer oder gleich 180° beträgt. Sodann werden die Faktoren geringfügig verkleinert, und zwar nur soweit, dass gerade keine Schwingung mehr entsteht. Hierdurch können nahezu die gesamten an den Elektrodenzuleitungen entstehenden Spannungsabfälle wie auch die aufgrund eines fiktiven Widerstandsnetzwerks innerhalb des Feststoffelektrolyten entstehenden Spannungsabfälle kompensiert werden.

### Zeichnung

Weitere Vorteile und Merkmale der Erfindung sind Gegenstand der nachfolgenden Beschreibung sowie der zeichnerischen Darstellung eines Ausführungsbeispiels der Erfindung.

In der Zeichnung zeigen:
- Fig. 1: eine schematische Schnittdarstellung durch einen aus dem Stand der Technik bekannten Sensor zur Bestimmung von Oxiden in Gasgemischen;
- Fig. 2: schematisch eine aus dem Stand der Technik bekannte Schaltungsordnung für einen in Fig. 1 dargestellten Sensor;
- Fig. 3: ein Ausführungsbeispiel einer zur Durchführung des erfindungsgemäßen Verfahrens geeigneten Schaltungsanordnung für einen in Fig. 1 dargestellten Sensor und
- Fig. 4: schematisch die Kopplung der an den Elektroden eines in Fig. 1 dargestellten Sensors anliegenden Spannungen/Ströme in Matrixform.

### Beschreibung des Ausführungsbeispiels

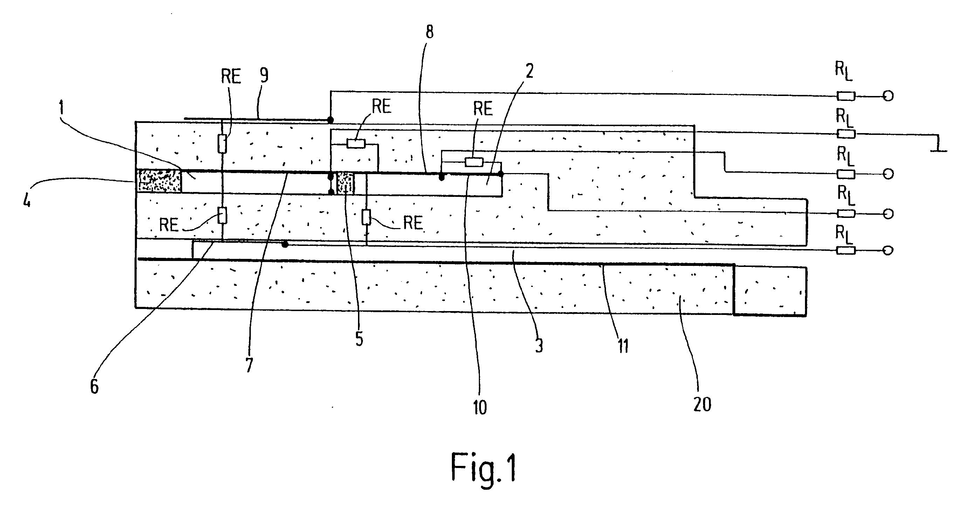

Ein NOx-Doppelkammersensor, dargestellt in Fig. 1, weist fünf Elektroden auf, eine dem Abgas ausgesetzte Sauerstoffpumpelektrode 9, eine in einer ersten Kammer 1 angeordnete, der dem Abgas ausgesetzten Sauerstoffpumpelektrode 9 im wesentlichen gegenüberliegende Sauerstoffpumpelektrode 7, eine in einer zweiten Kammer 2 angeordnete Sauerstoffpumpelektrode 8, eine ebenfalls in der zweiten Kammer 2 angeordnete NO-Pumpelektrode 10 sowie eine in einer dritten Kammer 3 angeordnete Luftreferenzelektrode 6.

Die erste Kammer 1 ist über eine Diffusionsbarriere 4 mit dem Abgas verbunden, die zweite Kammer 2 ist mit der ersten über eine weitere Diffusionsbarriere 5 verbunden.

Die dritte Kammer 3 ist mit der Atmosphäre über einen Kanal verbunden.

Die Sauerstoffpumpelektroden 7 und 8 pumpen aus der ersten Kammer 1 bzw. aus der zweiten Kammer 2 Sauerstoff ab. Als Gegenelektrode dient die äussere Pumpelektrode 9.

Stickoxide werden von der NO-Pumpelektrode 10 abgepumpt. Sämtliche Elektroden sind dabei auf einem ionenleitenden Feststoffelektrolyten 20 angeordnet, der beispielsweise aus Zirkonoxid bestehen kann, und mit diesem elektrisch leitend verbunden.

Ein isolierter Heizer 11 ist vorgesehen, um den Sensor auf die nötige Betriebstemperatur aufzuheizen.

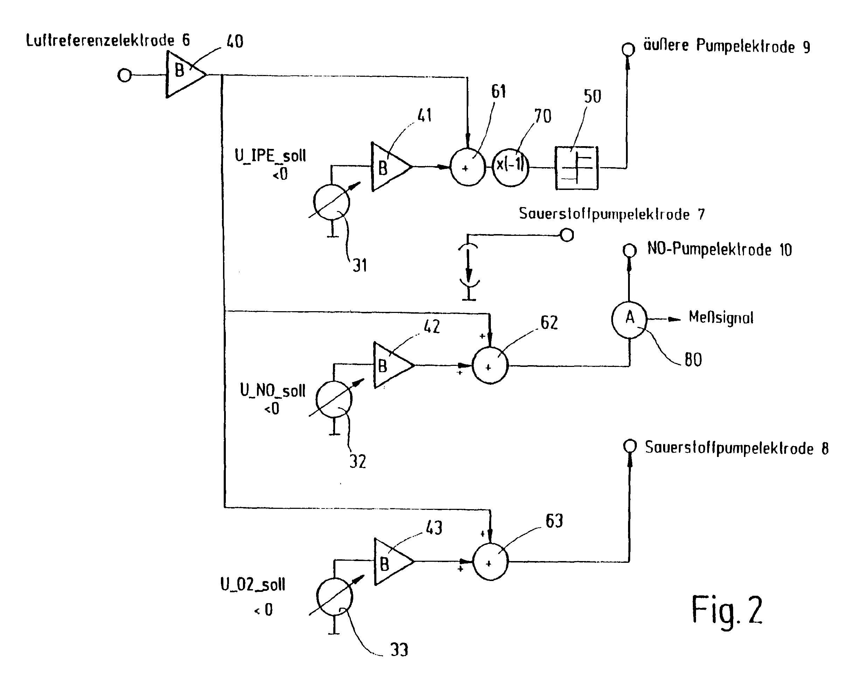

Zum Betrieb des Sensors dient eine Auswerteschaltung, die verschiedene elektrische Spannungen bereitstellt und das Messsignal aus einer Strommessung gewinnt. Ein Blockschaltbild einer solchen aus dem Stand der Technik bekannten Schaltung ist in Fig. 2 schematisch dargestellt. Die drei Spannungen für die in der ersten Kammer 1 und der zweiten Kammer 2 liegenden Sauerstoffpumpelektroden 7, 8 sowie für die NO-Pumpelektrode 10 werden über Spannungsreferenzen 31, 32, 33 und Treiber 41, 42, 43 generiert und um das Potential der Luftreferenz verschoben. Hierzu wird die von dem Treiber 40 ausgegebene Spannung zu der von den Treibern 41, 42, 43 ausgegebenen Spannung in Addiergliedern 61, 62, 63 auf an sich bekannte Weise addiert bzw. subtrahiert. Das Potential der äusseren Pumpelektrode 9 wird dabei über einen Zweipunktregler 50 eingestellt, so lange bis die Spannungsdifferenz zwischen der Sauerstoffpumpelektrode 7 und der Luftreferenzelektrode 6 einem vorgebbaren Sollwert entspricht. Die anderen Elektrodenpotentiale werden direkt eingestellt. Der NO-Pumpstrom kann über einen an sich bekannten Stromspannungswandler 80 gemessen und als Messsignal ausgegeben werden.

Da nun alle Elektroden leitend mit dem Feststoffelektrolyten 20 verbunden sind und die Isolationsschicht des Heizers 11 einen endlichen Widerstand aufweist, sind sämtliche Elektroden über ein Leitwertnetzwerk miteinander und hochohmig mit dem Heizer 11 verbunden. Die zahlenmäßig größten Leitwerte sind in Fig. 1 schematisch durch Widerstände R_{E} dargestellt. Ebenso sind Zuführungsleitwerte der Leiterbahnen zu den Elektroden vorhanden, die ebenfalls schematisch in Fig. 1 durch Widerstände R_{L} dargestellt sind.

Grundidee der Erfindung ist es nun, die Einstellung der erforderlichen Spannungen direkt an den Elektroden zu ermöglichen, ohne dass der Spannungsabfall an den Zuleitungswiderständen R_{L} oder die gegenseitige Kopplung der Elektroden über die Widerstände R_{E} diese Elektrodenspannungen verfälschen.

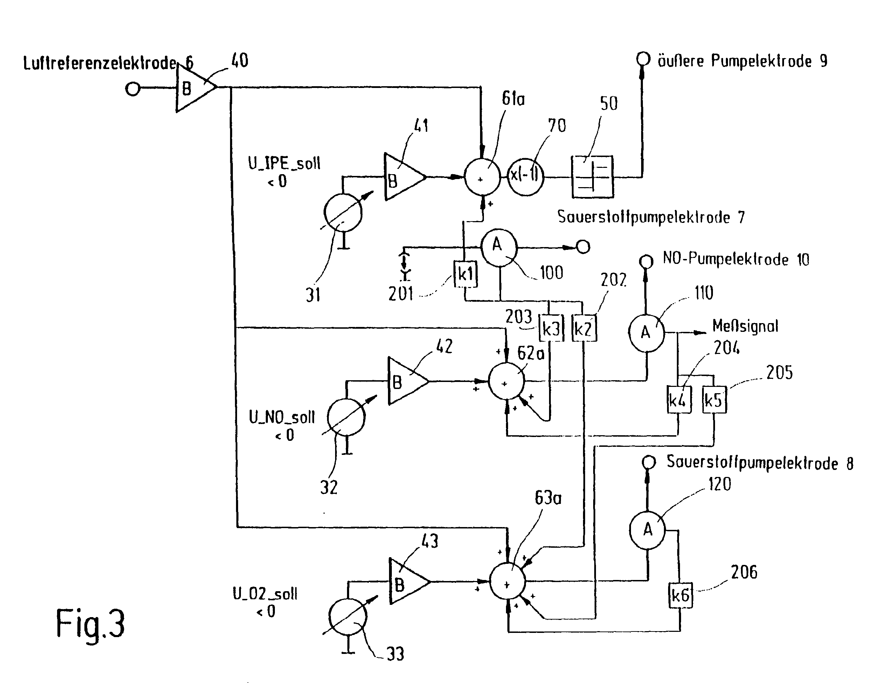

Dies wird durch ein Verfahren zum Betrieben eines Sensors gelöst, welches nachfolgend in Verbindung mit einer in Fig. 3 dargestellten Schaltung erläutert wird. Bei der in Fig. 3 dargestellten Schaltung sind diejenigen Elemente, die mit denen der in Fig. 2 dargestellten Schaltung identisch sind, mit denselben Bezugszeichen versehen sind, so dass bezüglich deren Beschreibung auf die Ausführungen zu der in Fig. 2 dargestellten Schaltung voll inhaltlich Bezug genommen wird. Die in Fig. 3 dargestellte Schaltung unterscheidet sich von der in Fig. 2 dadurch, dass Schaltungseinrichtungen vorgesehen sind, durch welche die an den Elektroden 7, 8, 9, 10 anliegenden Spannungen U_IPE, U_NO, U_O2 in Abhängigkeit von den in den Messleitungen und/oder zwischen den Elektroden fließenden Strömen veränderbar sind. Diese Schaltungseinrichtungen umfassen Stromspannungswandler 100, 110, 120 und Schaltungselemente (Kompensationszweige) 201, 202, 203, 204, 205, 206, die mit Kompensationsfaktoren K1, K2, K3, K4, K5, K6 gewichtet werden, derart, dass ein den Strömen proportionaler Anteil so auf die Elektroden rückgekoppelt wird, dass die im Festelektrolyten 20 übergekoppelten Anteile und die Zuleitungsverluste kompensiert werden. Durch eine derartige Rückkopplung werden die an den Zuleitungen messbaren Potentiale der Elektroden abhängig von den Strömen im Festelektrolyten 20 und den Zuleitungen. Die Ströme im Festelektrolyten 20 sind einer Messung zwar nicht zugänglich, ergeben sich aber an jedem Ort aus einer Linearkombination der Ströme in den Zuleitungen. Das Gesamtsystem wird dabei als elektrisch linear betrachtet. Aufgrund der Linearkombination der Ströme an jedem Ort erhält man auch an den Orten der Elektroden Spannungen, die linear von den Zuleitungsströmen abhängen. Die Rückkopplung erfolgt dabei so, dass man zunächst den Faktor K1 schrittweise erhöht, bis es zu einer Schwingung aufgrund der Rückkopplung kommt. Sodann wird Faktor K1 wieder geringfügig verringert, bis gerade keine Schwingung mehr auftritt. Entsprechend kann - sofern noch erforderlich - mit den weiteren Faktoren K2 bis K6 verfahren werden. Auf diese Weise wird sichergestellt, dass man praktisch sämtliche störenden Einflüsse aufgrund der Elektrodenzuleitungen genauso wie auch aufgrund der in dem Festelektrolyten 20 vorhandenen und störenden Widerstände zwischen den Elektroden eliminiert. Zusätzlich können die mittels elektrischer Schaltungsglieder gebildeten gleitenden Mittelwerte der den Strömen proportionalen Spannungen und/oder deren Ableitungen auch höheren Grades und/oder auch deren gleitende Mittelwerte oder Linearkombinationen daraus rückgekoppelt werden. Dadurch können nicht nur ohmsche, sondern auch kapazitive Kopplungen eliminiert werden.

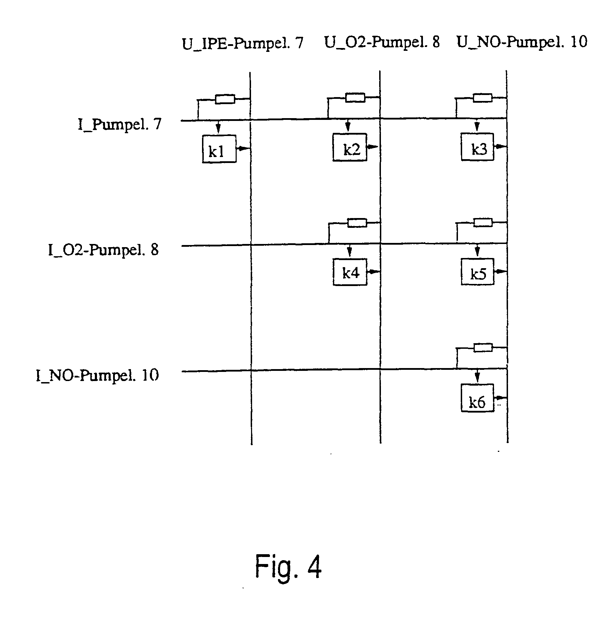

Fig. 4 zeigt schematisch die Kopplungsmatrix. Die Zeilen werden durch die Ströme der Elektroden I_Pumpelektrode 7, I_O2-Pumpelektrode 8 und I_NO-Pumpelektrode 10 gebildet. Der Strom der inneren Sauerstoffpumpelektrode I_Pumpelektrode 7 ist gegenüber den anderen beiden relativ groß und hat deshalb merklichen Einfluss auf die Elektrodenspannungen U_IPE oder an der Pumpelektrode 7, U_O2 an der Pumpelektrode 8 und U_NO an der Pumpelektrode 10. Die räumliche Nähe der Sauerstoffpumpelektrode 8 und der NO-Pumpelektrode 10 zueinander in der zweiten Kammer 2 führt zu einer ausgeprägten Kopplung. Die Besetzung der Hauptdiagonale der Kopplungsmatrix ergibt sich aus den Zuleitungswiderständen. Da die Matrix symmetrisch ist, genügt es, lediglich die auf einer Seite der Hauptdiagonale angeordneten Kompensationsfaktoren K2, K3, K5 und K1, K4, K6 zu betrachten.

## Patentansprüche

1. Verfahren zum Betreiben eines Sensors zur Bestimmung der Konzentration oxidierender Gase in Gasgemischen, insbesondere der Stickoxydkonzentration in Abgasen von Brennkraftmaschinen, wobei der Sensor umfasst:
wenigstens eine, in einem Feststoffelektrolyten (20) angeordnete Kammer (1; 2), die über eine erste Diffusionsbarriere (4) mit dem Gasgemisch verbunden ist,
eine in dem Feststoffelektrolyten (20) angeordnete zweite Kammer (3) mit einem vorgebbaren konstanten Sauerstoffpartialdruck, wobei
an dem Feststoffelektrolyten (20) eine dem Abgas ausgesetzte Sauerstoffpumpelektrode (9), in der wenigstens einen Kammer (1; 2) jeweils eine weitere Sauerstoffpumpelektrode (7; 8) sowie eine NO-Pumpelektrode (10), und in der zweiten Kammer (3) eine Sauerstoffreferenzelektrode (6) angeordnet sind,
und wobei wenigstens eine Spannung an den Elektroden bereitgestellt wird und wenigstens ein Pumpstrom als Messsignal ausgewertet wird, **dadurch gekennzeichnet, dass** man die an den Elektroden anliegenden Spannungen (U_IPE; U_O2; U_NO) in Abhängigkeit von den in den Elektrodenzuleitungen und/oder zwischen den Elektroden (6; 7; 8; 9; 10) fliessenden Ströme während des Betriebs des Sensors derart verändert, dass die an den Elektroden (6; 7; 8; 9; 10) im Inneren des Sensors anliegenden Spannungen vorgebbaren Sollwerten (U_IPE_soll; U_O2_soll; U_NO_soll) entsprechen.

2. Verfahren nach Anspruch 1, **dadurch gekennzeichnet, dass** man zu den an den Elektroden anliegenden Spannungen Spannungen addiert, die einer mit Faktoren (K1, K2, K3, K4, K5, K6) gewichteten Rückkopplung von Spannungsanteilen entsprechen, welche den in den Elektrodenzuleitungen und/oder zwischen den Elektroden (6; 7; 8; 9; 10) fließenden Strömen während des Betriebs des Sensors und/oder den mittels elektrischer Schaltungsglieder gebildeten gleitenden Mittelwerten der den Strömen proportionalen Spannungen und/oder deren Ableitungen auch höheren Grades und/oder deren gleitenden Mittelwerten oder Linearkombinationen daraus proportional sind.

3. Verfahren nach Anspruch 2, **dadurch gekennzeichnet, dass** man wenigstens einen der Faktoren (K1, K2, K3, K4, K5, K6) solange erhöht, bis durch die Rückkopplung eine Schwingung entsteht und dass man daraufhin diesen Faktor (K1, K2, K3, K4, K5, K6) geringfügig um einen experimentell zu bestimmenden Betrag verringert, so dass gerade keine Schwingung mehr entsteht.

## Claims

1. Method for operating a sensor for determining the concentration of oxidizing gases in gas mixtures, in particular the concentration of nitrogen oxide in exhaust gases of internal combustion engines, wherein the sensor comprises:
at least one chamber (1; 2) which is arranged in a solid electrolyte (20) and is connected to the gas mixture via a first diffusion barrier (4),
a second chamber (3) which is arranged in the solid electrolyte (20) and has a predefinable, constant oxygen partial pressure, wherein
an oxygen pump electrode (9) which is subjected to the exhaust gas is arranged on the solid electrolyte (20), a further oxygen pump electrode (7; 8) and an NO pump electrode (10) are respectively arranged in the at least one chamber (1; 2), and an oxygen reference electrode (6) is arranged in the second chamber (3),
and wherein at least one voltage is made available at the electrodes, and at least one pumping current is evaluated as a measurement signal, **characterized in that** the voltages (U_IPE; U_O2; U_NO) which are applied to the electrodes are changed, as a function of the currents flowing in the electrode feed lines and/or between the electrodes (6; 7; 8; 9; 10) while the sensor is operating, in such a way that the voltages present at the electrodes (6; 7; 8; 9; 10) in the interior of the sensor correspond to predefinable setpoint values (U_IPE_soll; U_O2_soll; U_NO_soll).

2. Method according to Claim 1, **characterized in that** the voltages which are present at the electrodes have added to them voltages which correspond to feedback of voltage components which are weighted with factors (K1, K2, K3, K4, K5, K6) and which are proportional to the currents flowing in the electrode feed lines and/or between the electrodes (6; 7; 8; 9; 10) while the sensor is operating and/or to the sliding mean values, formed by means of electric circuit elements, of the voltages which are proportional to the currents, and/or to the derivatives thereof, even of a relatively high degree and/or the sliding mean values thereof or linear combinations thereof.

3. Method according to Claim 2, **characterized in that** at least one of the factors (K1, K2, K3, K4, K5, K6) is increased until the feedback results in an oscillation, and **in that** this factor (K1, K2, K3, K4, K5, K6) is subsequently reduced slightly by an absolute value which is to be determined experimentally, just resulting in a situation in which no further oscillation occurs.

## Revendications

1. Procédé d'utilisation d'un détecteur de détermination de la concentration en gaz oxydants dans des mélanges de gaz et en particulier de la concentration en oxydes d'azote dans les gaz d'échappement de moteurs à combustion interne, le détecteur comprenant :
au moins une chambre (1; 2) disposée dans un électrolyte solide (20) et reliée au mélange de gaz par l'intermédiaire d'une première barrière à la diffusion (4),
une deuxième chambre (3) disposée dans l'électrolyte solide (20) et présentant une pression partielle d'oxygène constante et prédéterminée,
une électrode (9) de pompage d'oxygène exposée au gaz d'échappement étant disposée sur l'électrolyte solide (20), une autre électrode (7; 8) de pompage d'oxygène et une électrode (10) de pompage de NO étant disposées dans la ou les chambres (1; 2) et une électrode (6) de référence d'oxygène étant disposée dans la deuxième chambre (3),
au moins une tension étant appliquée sur les électrodes et au moins un courant de pompage étant évalué comme signal de mesure,
**caractérisé en ce que**
les tensions (U_IPE; U_02; U_NO) appliquées sur les électrodes sont modifiées en fonction des courants qui s'écoulent pendant le fonctionnement du détecteur dans les conducteurs des électrodes et/ou entre les électrodes (6; 7; 8; 9; 10), de telle sorte que les tensions appliquées à l'intérieur du détecteur sur les électrodes (6; 7; 8; 9; 10) correspondent à des valeurs de consigne (U_IPE_soll; U_O2_soll; U_NO_soll) prédéterminées.

2. Procédé selon la revendication 1, **caractérisé en ce qu'**aux tensions appliquées sur les électrodes sont ajoutées les tensions qui correspondent à une rétroaction de parties de tension pondérées par des facteurs (K1, K2, K3, K4, K5, K6) et proportionnelles aux courants qui s'écoulent dans les conducteurs des électrodes et/ou entre les électrodes (6; 7; 8; 9; 10) pendant le fonctionnement du détecteur et/ou aux valeurs moyennes glissantes, formées au moyen d'éléments de circuit électrique, des tensions proportionnelles aux courants, à leurs dérivées d'ordre plus élevé, à leurs valeurs moyennes glissantes et/ou à des combinaisons linéaires de ces valeurs.

3. Procédé selon la revendication 2, **caractérisé en ce que** l'on augmente au moins l'un des facteurs (K1, K2, K3, K4, K5, K6) jusqu'à ce que la rétroaction fasse apparaître une oscillation et **en ce qu'**on diminue ensuite légèrement ce facteur (K1, K2, K3, K4, K5, K6) d'une quantité déterminée expérimentalement, de telle sorte que plus aucune oscillation ne survienne.
